# EUROPEAN PATENT APPLICATION

(11) **EP 2 159 566 A2**
(43) Date of publication of application: **03.03.2010**
(21) Application number: 09167135.4
(22) Date of filing: 04.08.2009
(51) Int. Cl.: G01N 21/25, G01N 21/27, G01N 21/76

(54) **Optical detecting method and apparatus**

(30) Priority: 27.08.2008 KR 20080084051
(71) Applicant: SAMSUNG ELECTRONICS CO., LTD., Suwon-si, Gyeonggi-do (KR)
(72) Inventor: Hwang, Induk, Gyeonggi-do 449-712 (KR); Lee, Jeonggun, Gyeonggi-do 449-712 (KR); Yoo, Jungsuk, Gyeonggi-do 449-712 (KR)
(74) Representative: Grünecker, Kinkeldey, Stockmair & Schwanhäusser Anwaltssozietät

(57) **Abstract**

Provided is an optical detecting method including setting an amplification time for amplifying an electrical signal converted from light generated in reaction chambers, for example by chemiluminescence, changing the amplification time if a value obtained by amplifying the electrical signal for the amplification time is not within a predetermined range of values, and amplifying for the changed amplification time and outputting the amplified electrical signal.
Furthermore, an optical detection apparatus is provided, said apparatus comprising a rotatable disc with a plurality of reaction chambers, a rotation driving unit, an optical detection device, an amplification circuit, and an analog-to-digital converter.

## Description

### BACKGROUND

### 1. Field

One or more exemplary embodiments relate to an optical detecting method and apparatus.

### 2. Description of the Related Art

Various methods have been introduced to analyze a sample in various applications, such as environmental monitoring, food inspection, and medical diagnosis. The existing methods, however, need a large number of manual operations and various equipment. In order to test according to a predetermined protocol, an experienced tester should manually perform various operations, e.g., reagent injecting, mixing, separation, moving, reaction, and centrifuging, but such test methods are a major cause of errors in test results.

An experienced clinical pathologist is needed to quickly and precisely perform a test. Even an experienced clinical pathologist, however, may have difficulties performing a plurality of tests at the same time. It is important to quickly obtain a test result in order to diagnose and take emergency measures for a first-aid patient. Thus, there is a need to develop an apparatus capable of simultaneously, quickly and precisely conducting various pathological tests needed according to a situation.

In a related art pathological test, large and expensive, automatic equipment is also used and testing material, such as a relatively large amount of blood, is needed. Also, it takes much time to perform such a test, and thus, a test result cannot be obtained for a minimum of two to three days or a maximum of one to two weeks after collecting testing material from a patient.

In order to solve this problem, small-sized automatic equipment has been developed to measure testing material collected from one or a small number of patients if necessary. For example, when blood is injected into a microfluidic disc and the microfluidic disc is rotated, serum is isolated from blood due to a centrifugal force. The isolated serum is mixed together with a predetermined amount of a diluted solution and then is transferred to a plurality of reaction chambers in the microfluidic disc. Each of the reaction chambers contains an antibody that reacts in a particular manner to material that is to be measured. When a substrate for chemiluminescence is injected into a reaction chamber and reacts to the antibody, a light-emitting signal is generated. The concentration of a sample can be measured by detecting the intensity of the light-emitting signal.

### SUMMARY

One or more exemplary embodiments include an optical detecting method and apparatus capable of measuring light with various intensities, which is generated in reaction chambers included in a sample analysis device that uses a rotatable microfluidic disc.

Additional aspects will be set forth in part in the description which follows and, in part, will be apparent from the description, or may be learned by practice of the invention.

To achieve the above and/or other aspects, one or more exemplary embodiments may include a method of detecting light generated in at least two reaction chambers included in a rotatable disc, the method including setting an amplification time needed to amplify an electrical signal converted from the light; determining whether an output value obtained by amplifying the electrical signal for the amplification time falls within a predetermined range of values; if the output value does not fall within the predetermined range of values, changing the amplification time; and amplifying the electrical signal for the changed amplification time and then outputting the amplified electrical signal.

To achieve the above and/or other aspects, one or more exemplary embodiments may include an optical detecting apparatus including a rotatable disc having a plurality of reaction chambers in which a reagent and a sample react to each other; a rotation driving unit rotating the disc; and an optical detection unit detecting light generated in the reaction chambers, wherein the optical detection unit includes an optical detection device receiving the light and generating an electrical signal; an amplification circuit amplifying the electrical signal; and an analog-to-digital converter converting the amplified electrical signal into a predetermined number of digital values.

### BRIEF DESCRIPTION OF THE DRAWINGS

These and/or other aspects will become apparent and more readily appreciated from the following description of exemplary embodiments, taken in conjunction with the accompanying drawings of which:

FIG. 1 is a schematic perspective view of a sample analysis device that uses a rotatable microfluidic disc according to an exemplary embodiment;

FIG. 2 is a block diagram of an optical detecting apparatus according to an exemplary embodiment;

FIG. 3 is a circuit diagram illustrating an internal construction of an amplification circuit illustrated in FIG. 2 according to an exemplary embodiment;

FIGS. 4A and 4B are waveform diagrams of a first switch and a second switch included in the amplification circuit illustrated in FIG. 3, according to an exemplary embodiment;

FIG. 4C is a waveform diagram of a voltage of the amplification circuit according to operations of the first and second switches, according to an exemplary embodiment; and

FIG. 5 is a flowchart illustrating an optical detecting method according to an exemplary embodiment.

### DETAILED DESCRIPTION OF EXEMPLARY EMBODIMENTS

Reference will now be made in detail to exemplary embodiments, examples of which are illustrated in the accompanying drawings, wherein like reference numerals refer to the like elements throughout. In this regard, the present exemplary embodiments may have different forms and should not be construed as being limited to the descriptions set forth herein. Accordingly, exemplary embodiments are described below, by referring to the figures, to explain aspects of the present description.

A method of detecting light in a sample analysis device that uses a rotatable microfluidic disc according to an exemplary embodiment will now be described in greater detail with reference to the accompanying drawings.

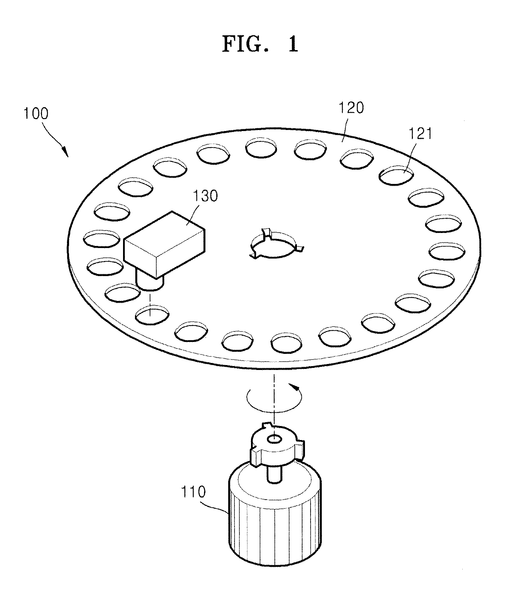

FIG. 1 is a schematic perspective view of a sample analysis device 100 that uses a rotatable microfluidic disc according to an exemplary embodiment. As illustrated in FIG. 1, the sample analysis device 100 includes a rotatable disc 120 having a plurality of reaction chambers 121 in which a reagent and a sample react to each other, a rotation driving unit 110 that rotates the disc 120, and an optical detection unit 130 that detects light generated in the reaction chambers 121.

The plurality of reaction chambers 121 are arranged around the edge of the rotatable disc 120 at regular intervals. Different reagents have been respectively injected into the reaction chambers 121 according to test items. Each of the reagents injected into the respective reaction chambers 121 reacts to a particular material from among materials included in the sample and then generates light. The types of the materials that react and their light emitting characteristics may vary according to the types of the reagents. Although FIG. 1 illustrates only the reaction chambers 121, at the center of the disc 120, a sample chamber for containing a sample such as blood, a reagent chamber for containing another reagent, such as a diluted solution, which may be mixed together with the sample, a plurality of channels connecting the chambers, and a valve controlling the flow of a fluid via the channels, may also be included. In such a construction, when the disc 120 is rotated at high speeds, the sample in the sample chamber flows along the circumference of the disc 120 via the channels, due to the a centrifugal force, is mixed together with the reagents, and then the mixture is injected into the reaction chambers 121.

The optical detection unit 130 is disposed to face an upper surface of the disc 120. In particular, at least a portion the optical detection unit 130 is disposed be directly above the reaction chambers 121 of the disc 120.

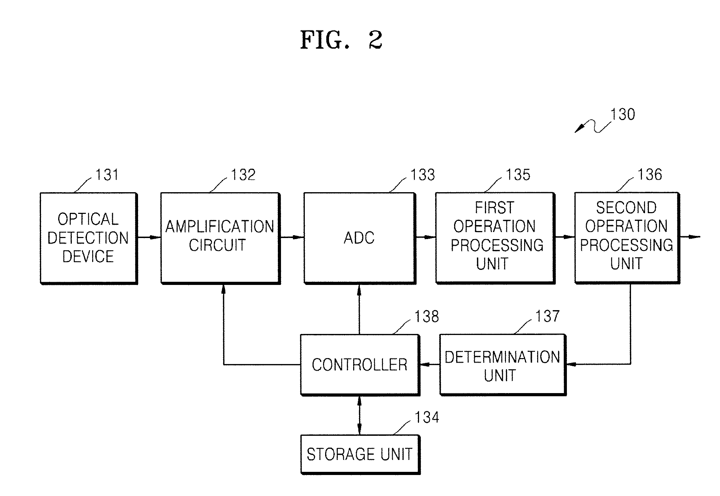

FIG. 2 is a block diagram of an optical detecting device according to an exemplary embodiment, which corresponds to the optical detection unit 130 illustrated in FIG. 1.

Referring to FIG. 2, the optical detecting device includes an optical detection device 131, an amplification circuit 132, an analog-to-digital converter (ADC) 133, a storage unit 134, a first operation processing unit 135, a second operation processing unit 136, a determination unit 137 and a controller 138.

The optical detection device 131 receives light generated in the reaction chambers 121 of FIG. 1 and generates an electrical signal. Here, the electrical signal means current or voltage. The optical detection device 131 may be one photomultiplier tube (PMT) or a photo diode. The optical detection device 131 may include a plurality of PMTs or photo diodes, or an area-type imaging device, such as a charge-coupled device (CCD).

The amplification circuit 132 receives and amplifies the electrical signal generated by the optical detection device 131 and outputs the amplified electrical signal. In this case, the amplification circuit 132 amplifies the electrical signal received from the optical detection device 131 during a first time period. Here, the first time period is a time period needed to amplify the electrical signal and may be changed. The longer the first time period, the greater the intensity of the amplified electrical signal. Thus, if the intensity of the light generated in the reaction chambers 121 is large, it is possible to detect light having small intensity from the light having large intensity by reducing the length of the first time period. If the intensity of the light generated in the reaction chambers 121 is small, it is possible to detect light having large intensity from the light having small intensity by increasing the length of the first time period.

The ADC 133 converts the amplified electrical signal received from the amplification circuit 132 into a predetermined number of digital values. In this case, the ADC 133 converts the amplified electrical signal received from the amplification circuit 132 into a predetermined number of digital values during a second time period. Here, the first time period may be equal to the second time period.

The storage unit 134 stores information on an amplification time needed to amplify the electrical signal generated from the light generated in the reaction chambers 121. The amplification time includes the first and second time periods, and thus, the storage unit 134 stores information on the first time period needed for the amplification circuit 132 to amplify the electrical signal generated by the optical detection device 131 and information on the second time period needed for the ADC 133 to convert the amplified electrical signal into the predetermined number of digital values.

The first operation processing unit 135 calculates an average of the predetermined number of digital values received from the ADC 133. In this case, the amplification circuit 132 and the ADC 133 respectively, repeatedly perform their operations for a predetermined time and thus the first operation processing unit 135 also calculates an average of the digital values for the predetermined time whenever receiving the digital values from the ADC 133.

The second operation processing unit 136 calculates an average of outputs received from the first operation processing unit 135, multiplies the average of the outputs by a weight according to the stored amplification time, and then outputs the multiplication result for the predetermined time. Also, the weight is inversely proportional to the length of the first time period. That is, the longer the time needed to amplify the electrical signal, the higher the intensity of the amplified electrical signal. Thus, the multiplication result should be multiplied by the weight that is inversely proportional to the length of the first time period in order to output a constant value with respect to an electrical signal with the same intensity regardless of the length of the first time period.

The determination unit 137 determines whether an output of the second operation processing unit 136 is within a predetermined range of values. Here, the predetermined range of values is a range of light intensities that may be measured by the optical detection device according to an exemplary embodiment for the amplification time stored in the storage unit 134. The predetermined range of values corresponds to the amplification time stored in the storage unit 134. For example, it is assumed that the range of light intensities that may be measured by the optical detection device according to the exemplary embodiment is about 1,000 to about 10,000 units when the amplification time stored in the storage unit 134 is 10 µs. In this case, if the amplification time is 1 µs, the range of light intensities is about from 100 to about 1,000 units. If the stored amplification time is 10 µs, the determination unit 137 determines whether the output of the second operation processing unit 136 falls within a range of about 1,000 to about 10,000 units. The determination result is output from the determination unit 137 to the controller 138.

The controller 138 outputs a first control signal so that the amplification circuit 132 amplifies the electrical signal during the first time period, and outputs a second control signal so that the ADC 133 converts the amplified electrical signal into a predetermined number of digital values during the second time period. Also, the controller 138 changes the first and second time periods stored in the storage unit 134 when it receives from the determination unit 137 a determination that the output of the second operation processing unit 136 is not within the predetermined range of values. If a value output from the second operation processing unit 136 is within a range of about 1,000 to about 10,000 units, the amplification time stored in the storage unit 134 may not be changed. However, if the value output from the second operation processing unit 136 does not range from about 1,000 to about 10,000 units, the controller 138 may change the amplification time to adjust the predetermined range of values. That is, if a determination that the value output from the second operation processing unit 136 is greater than 10,000 units is received from the determination unit 137, the controller 138 changes the amplification time to be less than 10 µs. If a determination that the value output from the second operation processing unit 136 is less than 1,000 units is received from the determination unit 137, the controller 138 changes the amplification time to be greater than 10 µs and then stores the changed amplification time in the storage unit 134.

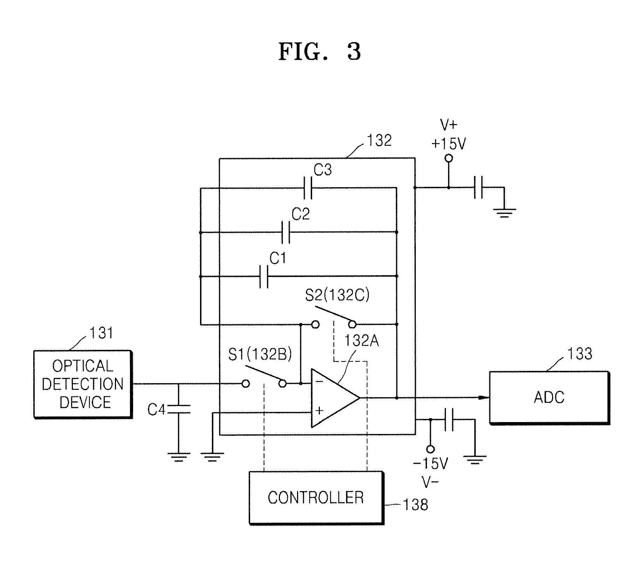

FIG. 3 is a circuit diagram illustrating an internal construction of the amplification circuit 132 illustrated in FIG. 2 according to an exemplary embodiment. Referring to FIG. 3, the amplification circuit 132 includes an operation amplifier 132A, a first switch (S1) 132B, a second switch (S2) 132C, and a plurality of capacitors C1, C2, and C3. More specifically, according to an exemplary embodiment, the amplification circuit 132 includes the operation amplifier 132A, the first switch 132B connected between an negative input terminal (-) of the operation amplifier 132A and the optical detection device 131, the second switch 132C connected between the negative input terminal (-) and an output terminal of the operation amplifier 132A, and the capacitors C1, C2, and C3 that are connected between the negative input terminal (-) and the output terminal. In this case, in the amplification circuit 132 according to an exemplary embodiment, the capacitors C1, C2, and C3 are present inside the amplification circuit 132 and thus are referred to as internal capacitors. A capacitor C4 outside the amplification circuit 132 is referred to as an external capacitor.

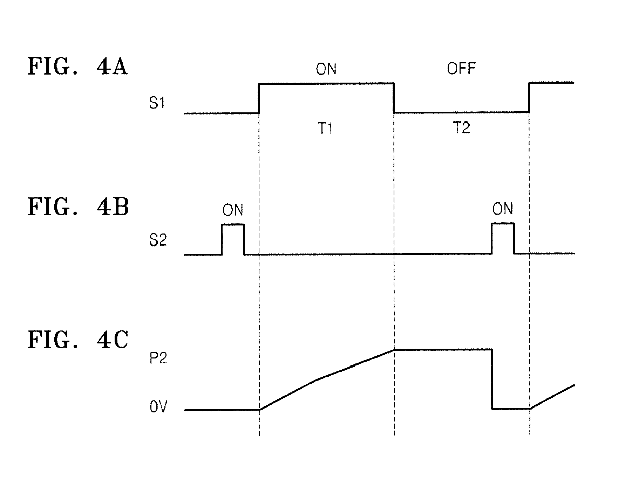

FIGS. 4A and 4B are waveform diagrams of the first switch 132B and the second switch 132C included in the amplification circuit 132 illustrated in FIG. 3 and FIG. 4C is a waveform diagram of a voltage of the amplification circuit 132 according to operations of the first and second switches 132B and 132C, according to an exemplary embodiment.

The operation of the amplification circuit 132 and a change in the voltage thereof according to the operations of the first and second switches 132B and 132C will now be described with reference to FIGS. 4A, 4B and 4C.

The controller 138 outputs control signals for controlling the first switch 132B and the second switch 132C of the amplification circuit 132. As illustrated in FIG. 4A, the first switch 132B is switched on during a first time period in response to a first control signal received from the controller 138, and is switched off during a second time period in response to a second control signal received from the controller 138. Also, the second switch 132C is switched on in response to a third control signal received from the controller 138, and is switched off in response to a fourth control signal received from the controller 138. Here, the first switch 132B allows an external current to flow through the capacitors C1 to C3 inside the amplification circuit 132, and the second switch 132C allows the capacitors C1 to C3 to discharge so as to initialize an output voltage to 0 V. In this case, the first switch 132B is repeatedly switched on and off at a ratio of 1:1, in response to the first control signal and the second control signal. Here, a time period during which the first switch 132B is kept switched on is the first time period and a time period during which the first switch 132B is kept switched off is the second time period. If the first switch 132B is kept switched on for the first time period in response to the first control signal, the capacitors C1 through C3 are charged with external current. If the first switch 132B is switched off in response to the second control signal, an external current supply circuit (not shown) is switched off, current-charging to the capacitors C1 to C3 is discontinued for the second time period during which the first switch 132B is kept switched off, and thus a charged voltage of the capacitors C1 to C3 is maintained. For the second time period, the ADC 133 converts the voltage into a predetermined number of digital values. Also, as illustrated in FIG. 4B, the second switch 132C is switched on or off during the second time period. After the voltage amplified by the ADC 133 is converted into the predetermined number of digital values by the ADC 133 as described above, the second switch 132C is switched on during the second time period to reset the charged voltage to 0 V and then prepares for current-charging of the capacitors C1 to C3. Also, while the first switch 132B is switched off, the capacitor C4 is connected to the amplification circuit 132 in order to compensate for a current-loss caused by a sensor (not shown). While the first switch 132B is switched off, the capacitors C1 to C3 are charged with current generated by the sensor. Then, if the first switch 132B is switched on, the charge in the capacitor C4 is provided as current to the capacitors C1 to C3. Such an operation causes a voltage of a current supply unit (not shown) to be always maintained at 0 V due to a feedback of an amplifier (not shown), and thus all electric charge remaining in the capacitor C4 is provided to the capacitors C1 to C4. In this operation, it is possible to use all the current stored in the sensor for measurement when the capacitors C1 to C3 are not charged due to analog-to-digital conversion, thereby reducing noise in the system. The analog-to-digital conversion occurs during the second time period. Accordingly, the voltage of an output terminal P2 of the amplification circuit 132 changes as illustrated in FIG. 4C. That is, as illustrated in FIG. 4C, the capacitors C1 to C3 are charged by the optical detection device 131 and the capacitor C4 at the beginning of the first time period, and then when all the charge in the capacitor C4 is provided as current to the capacitors C1 to C3, the capacitors C1 to C3 are charged only by current generated by the optical detection device 131. Thus, the level of the voltage of the output terminal P2 of the amplification circuit 132 decreases. Also, when the first switch 132B that is kept switched on during the first time period is switched off, the voltage of the output terminal P2 of the amplification circuit 132 is maintained, and when the second switch 132C is switched on, the voltage of the amplification circuit 132 becomes 0 V. The waveforms of FIGS. 4A, 4B and 4C are periodically repeated for a predetermined time. In this case, the longer the amplification time, the less the total number of waveforms reappearing during the predetermined time period. As described above, an optical detection device according to an exemplary embodiment is capable of precisely detecting the intensities of various light by detecting the intensities of light in reaction chambers while changing an amplification time according to light intensity.

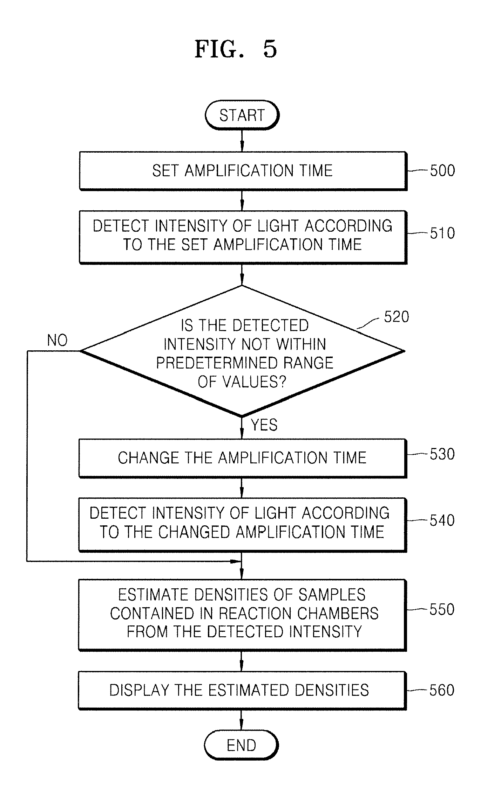

FIG. 5 is a flowchart illustrating an optical detecting method according to an exemplary embodiment. In operation 500, amplification times are set. In a rotatable disc having at least two reaction chambers as illustrated in FIG. 1, in order to detect light generated in the reaction chambers, an amplification time needed to amplify an electrical signal converted from the light is set. Here, the amplification time includes a first time period needed to amplify the electrical signal and a second time period needed to convert the amplified electrical signal into a predetermined number of digital values. The first time period may be equal to the second time period.

In operation 510, the intensity of the light is detected according to the set amplification time. More specifically, the electrical signal converted from the light is amplified during the first time period, the amplified electrical signal is converted into a predetermined number of digital values for the second time period, an average of the digital values is calculated and output, and then the average is determined as the intensity of the light.

In operation 520, it is determined whether the determined intensity of the light is not within a predetermined range of values. Here, the predetermined range of values mean intensities of light that may be measured for the set amplification time. If it is determined in operation 520 that the determined intensity of the light does is not within the predetermined range of values, operation 530 is performed and otherwise operation 550 is performed.

In operation 530, the amplification time is changed. Since the predetermined range of values corresponds to the set amplification time, a change in the set amplification time results in a change in the predetermined range of values corresponding to the amplification time. Thus, assuming that the predetermined range of values is about 100 to about 10,000 units when the set amplification time is 10 µs, if the determined intensity of the light is less than 100 units, the set amplification time may be changed to 100 µs in order to increase the determined intensity of the light to be greater than 100 units. As described above, it is possible to change the intensity of light that may be detected for the amplification time by changing the amplification time. In detail, the first time period needed to amplify the electrical signal and the second time period needed to convert the amplified electrical signal into a predetermined number of digital values are changed.

In operation 540, the intensity of the light is detected according to the changed amplification time. That is, the electrical signal is amplified for the changed first time period, the amplified electrical signal is converted into the predetermined number of values for the changed second time period, and then an average of the digital values is calculated and output. More specifically, the amplifying of the electrical signal, the converting of the amplified electrical signal into the digital values, and the calculating and outputting of the average of the digital values are repeatedly performed for a predetermined time, an average of the averages output for the predetermined time is calculated, the final average is multiplied by a weight, the multiplication result is output, and then the multiplication result is determined as the intensity of the light.

In operation 550, the concentrations of samples contained in the reaction chambers are estimated based on the determined intensity of the light. The concentrations of the samples in the reaction chambers may be estimated from the determined intensity of the light since the concentrations are proportional to the determined intensity of the light.

In operation 560, the estimated concentrations are displayed. It is possible to display the estimated concentrations via either a display of a rotatable disc having at least two reaction chambers as illustrated in FIG. 1 or a host connected to the rotatable disc.

In addition, other exemplary embodiments can also be implemented through computer readable code/instructions in/on a medium, e.g., a computer readable medium, to control at least one processing element to implement any above described exemplary embodiment. The medium can correspond to any medium/media permitting the storage and/or transmission of the computer readable code.

The computer readable code can be recorded/transferred on a computer readable recording medium in a variety of ways. Examples of the computer readable recording medium include magnetic storage media (e.g., ROM, floppy disks, hard disks, etc.) and optical recording media (e.g., CD-ROMs, or DVDs). The computer readable recording media may also be a distributed network, so that the computer readable code is stored/transferred and executed in a distributed fashion. Furthermore, the processing element could include a processor or a computer processor, and processing elements may be distributed and/or included in a single device.

It should be understood that the exemplary embodiments described herein should be considered in a descriptive sense only and not for purposes of limitation. Descriptions of features or aspects within each exemplary embodiment should typically be considered as available for other similar features or aspects in other exemplary embodiments.

In particular, the invention provides the following 22 embodiments:
Embodiment 1. A method of detecting light generated in at least two reaction chambers included in a rotatable disc, the method comprising:
   setting an amplification time;
   amplifying an electrical signal, which is generated by converting the light, for the amplification time;
   determining whether an output value obtained based on a result of the amplifying the electrical signal is within a predetermined range of values;
   if it is determined that the output value is not within the predetermined range of values, changing the amplification time; and
   amplifying the electrical signal for the changed amplification time and then outputting the amplified electrical signal.
Embodiment 2. The method of embodiment 1, wherein the changing the amplification time comprises:
   reducing the amplification time if the output value is greater than the predetermined range of values; and
   increasing the amplification time if the output value is less than the predetermined range of values.
Embodiment 3. The method of embodiment 1, wherein the amplification time comprises:
   a first time period for amplifying the electrical signal; and
   a second time period for converting the amplified electrical signal into digital values.
Embodiment 4. The method of embodiment 3, wherein the first time period is equal to the second time period.
Embodiment 5. The method of embodiment 3, wherein the amplifying the electrical signal for the changed amplification time comprises:
   amplifying the electrical signal for the first time period of the changed amplification time;
   converting the amplified electrical signal into a predetermined number of digital values for the second time period of the changed amplification time; and
   calculating and outputting an average of the digital values.
Embodiment 6. The method of embodiment 5, wherein the amplifying the electrical signal for the first time period, the converting the amplified electrical signal into the predetermined number of digital values for the second time period, and the calculating and outputting the average of the digital values are repeatedly performed for a predetermined time, and
   the method further comprising:
   calculating an average of the average digital values output during the predetermined time; and
   multiplying the calculated average by a weight according to the changed amplification time and outputting a result of the multiplying.
Embodiment 7. The method of embodiment 6, wherein the weight is inversely proportional to a length of the first time period.
Embodiment 8. The method of embodiment 1, further comprising:
   estimating concentrations of samples contained in the at least two reaction chambers, based on the output amplified electrical signal; and
   displaying the estimated concentrations.
Embodiment 9. The method of embodiment 1, wherein the predetermined range of values is changed according to the amplification time.
Embodiment 10. An optical detecting apparatus comprising:
   a rotatable disc including a plurality of reaction chambers in which a reagent and a sample react to each other;
   a rotation driving unit which rotates the disc; and
   an optical detection unit which detects light generated in the reaction chambers,
   wherein the optical detection unit comprises:
      an optical detection device which receives the light generated in the reaction chambers and generates an electrical signal based on the received light;
      an amplification circuit which amplifies the electrical signal; and
      an analog-to-digital converter which converts the amplified electrical signal into a predetermined number of digital values.
Embodiment 11. The apparatus of embodiment 10, wherein the optical detection unit further comprises a storage unit which stores information on a first time period for the amplification circuit to amplify the electrical signal and information on a second time period for the analog-to-digital converter to convert the amplified electrical signal into a predetermined number of digital values.
Embodiment 12. The apparatus of embodiment 11, wherein the optical detection unit further comprises a controller which outputs a first control signal to control the amplification circuit to amplify the electrical signal for the first time period, and outputs a second control signal to control the analog-to-digital converter to convert the amplified electrical signal into the predetermined number of digital values for the second time period.
Embodiment 13. The apparatus of embodiment 12, wherein the optical detection unit further comprises a first operation processing unit which calculates and outputs an average of the digital values.
Embodiment 14. The apparatus of embodiment 13, wherein the amplification circuit and the analog-to-digital converter repeatedly perform the amplification and the conversion for a predetermined time, and
   the optical detection unit further comprises a second operation processing unit which calculates an average of values received from the first operation processing unit, multiplies the average by a weight according to the first and second time periods, and then outputs a result of the multiplying, during the predetermined time.
Embodiment 15. The apparatus of embodiment 14, wherein the optical detection unit further comprises a determination unit which determines whether the result of the multiplying received from the second operation processing unit is within a predetermined range of values,
   wherein if the determination unit determines that the result of the multiplying received from the second operation processing unit is not within the predetermined range of values, the controller controls the storage unit to store information on a changed first time period and information on a changed second time period.
Embodiment 16. The apparatus of embodiment 15, wherein if the determination unit determines that the result of the multiplying received from the second operation processing unit is greater than the predetermined range of values, the controller reduces the first and second times and stores the information on the changed first and second time periods in the storage unit, and
   if the determination unit determines that the result of the multiplying received from the second operation processing unit is less than the predetermined range of values, the controller increases the first and second time periods and stores information on the changed first and second time periods in the storage unit.
Embodiment 17. The apparatus of embodiment 15, wherein the weight is inversely proportional to a length of the first time period.
Embodiment 18. The apparatus of embodiment 14, wherein the predetermined range of values are changed according to the first and second time periods.
Embodiment 19. The apparatus of embodiment 13, wherein the amplification circuit comprises:
   an operation amplifier;
   a first switch connected between an input terminal of the operation amplifier and the optical detection device;
   a second switch connected between the input terminal and an output terminal of the operation amplifier; and
   a plurality of capacitors connected between the input terminal and the output terminal.
Embodiment 20. The apparatus of embodiment 19, wherein the controller switches on the first switch by outputting the first control signal during the first time period in order to control the amplification circuit to amplify the electrical signal, and switches off the first switch by outputting the second control signal during the second time in order to control the analog-to-digital converter to convert the amplified electrical signal into the predetermined number of digital values and the first operation processing unit to calculate and output an average of the digital values.
Embodiment 21. The method of embodiment 1, wherein the amplifying the electrical signal comprises amplifying the electrical signal, converting the amplified electrical signal into a predetermined number of digital values, and determining the output value based on an average of the digital values.
Embodiment 22. The apparatus of embodiment 11, wherein the optical detection unit further comprises a controller which controls the amplification circuit to amplify the electrical signal for a first time period and the analog-to-digital converter to convert the amplified electrical signal into the predetermined number of digital values for a second time period, and if an output value obtained based on the digital values is not within a predetermined range of values, changes the first and second time periods.

## Claims

1. A method of detecting light generated in at least two reaction chambers included in a rotatable disc, the method comprising:
setting an amplification time;
amplifying an electrical signal, which is generated by converting the light, for the amplification time;
determining whether an output value obtained based on a result of the amplifying the electrical signal is within a predetermined range of values;
if it is determined that the output value is not within the predetermined range of values, changing the amplification time; and
amplifying the electrical signal for the changed amplification time and then outputting the amplified electrical signal.

2. The method of claim 1, wherein the changing the amplification time comprises:
reducing the amplification time if the output value is greater than the predetermined range of values; and
increasing the amplification time if the output value is less than the predetermined range of values.

3. The method of claim 1 or 2, wherein the amplification time comprises:
a first time period for amplifying the electrical signal; and
a second time period for converting the amplified electrical signal into digital values,
in particular, wherein the first time period is equal to the second time period.

4. The method of claim 3, wherein the amplifying the electrical signal for the changed amplification time comprises:
amplifying the electrical signal for the first time period of the changed amplification time;
converting the amplified electrical signal into a predetermined number of digital values for the second time period of the changed amplification time; and
calculating and outputting an average of the digital values.

5. The method of claim 4, wherein the amplifying the electrical signal for the first time period, the converting the amplified electrical signal into the predetermined number of digital values for the second time period, and the calculating and outputting the average of the digital values are repeatedly performed for a predetermined time, and
the method further comprising:
calculating an average of the average digital values output during the predetermined time; and
multiplying the calculated average by a weight according to the changed amplification time and outputting a result of the multiplying,
in particular, wherein the weight is inversely proportional to a length of the first time period.

6. The method of one of claims 1 to 5, further comprising:
estimating concentrations of samples contained in the at least two reaction chambers, based on the output amplified electrical signal; and
displaying the estimated concentrations.

7. The method of one of claims 1 to 6, wherein the predetermined range of values is changed according to the amplification time;
and/or wherein the amplifying the electrical signal comprises amplifying the electrical signal, converting the amplified electrical signal into a predetermined number of digital values, and determining the output value based on an average of the digital values.

8. An optical detecting apparatus (100) comprising:
a rotatable disc (120) including a plurality of reaction chambers (121) in which a reagent and a sample react to each other;
a rotation driving unit (110) which rotates the disc; and
an optical detection unit (130) which detects light generated in the reaction chambers,
wherein the optical detection unit (130) comprises:
an optical detection device (131) which receives the light generated in the reaction chambers and generates an electrical signal based on the received light;
an amplification circuit (132) which amplifies the electrical signal; and
an analog-to-digital converter (133) which converts the amplified electrical signal into a predetermined number of digital values.

9. The apparatus of claim 8, wherein the optical detection unit further comprises a storage unit (134) which stores information on a first time period for the amplification circuit to amplify the electrical signal and information on a second time period for the analog-to-digital converter to convert the amplified electrical signal into a predetermined number of digital values.

10. The apparatus of claim 9, wherein the optical detection unit further comprises a controller (138) which outputs a first control signal to control the amplification circuit to amplify the electrical signal for the first time period, and outputs a second control signal to control the analog-to-digital converter to convert the amplified electrical signal into the predetermined number of digital values for the second time period.

11. The apparatus of claim 10, wherein the optical detection unit further comprises a first operation processing unit (135) which calculates and outputs an average of the digital values.

12. The apparatus of claim 11, wherein the amplification circuit and the analog-to-digital converter repeatedly perform the amplification and the conversion for a predetermined time, and
the optical detection unit further comprises a second operation processing unit (136) which calculates an average of values received from the first operation processing unit, multiplies the average by a weight according to the first and second time periods, and then outputs a result of the multiplying, during the predetermined time.

13. The apparatus of claim 12, wherein the optical detection unit further comprises a determination unit (137) which determines whether the result of the multiplying received from the second operation processing unit is within a predetermined range of values,
wherein if the determination unit determines that the result of the multiplying received from the second operation processing unit is not within the predetermined range of values, the controller controls the storage unit to store information on a changed first time period and information on a changed second time period.

14. The apparatus of claim 11, wherein the amplification circuit comprises:
an operation amplifier (132A);
a first switch (132B) connected between an input terminal of the operation amplifier and the optical detection device;
a second switch (132C) connected between the input terminal and an output terminal of the operation amplifier; and
a plurality of capacitors (C1, C2, C3) connected between the input terminal and the output terminal.

15. The apparatus of claim 9, wherein the optical detection unit further comprises a controller which controls the amplification circuit to amplify the electrical signal for a first time period and the analog-to-digital converter to convert the amplified electrical signal into the predetermined number of digital values for a second time period, and if an output value obtained based on the digital values is not within a predetermined range of values, changes the first and second time periods.
